# EUROPEAN PATENT SPECIFICATION

(11) **EP 2 063 069 B1**
(45) Date of publication and mention of the grant of the patent: **22.12.2010**
(21) Application number: 07121304.5
(22) Date of filing: 22.11.2007
(51) Int. Cl.: E21B 47/04, E21B 47/09

(54) **Autonomous wellbore navigation device**
Autonome Bohrlochnavigationsvorrichtung
Dispositif de navigation autonome dans un trou de forage

(43) Date of publication of application: 27.05.2009
(73) Proprietor: PRAD Research and Development N.V., Willemstad, Curacao (AN); Schlumberger Holdings Limited, Road Town, Tortola (VG); Schlumberger Technology B.V., 2514 JG The Hague (NL); Services Pétroliers Schlumberger, 75007 Paris (FR)
(72) Inventor: Durocher, Claude, 92142 Clamart (FR); Smith, Gordon, 92142 Clamart (FR)
(74) Representative: Vandermolen, Mathieu

(56) References cited:
- GB-A- 2 355 535
- GB-A- 2 396 219
- US-A1- 2002 103 630

## Description

### Technical field

This invention relates to the method and tool for estimating the position of an autonomous downhole device in a wellbore.

### Background art

There are a number of situations where it is desirable to estimate accurately the position of an apparatus in a welllbore. For example when making a wireline log or analysing a slickline log, the position of the logging tool is needed when each measurement is made. When intervening in a well with coiled tubing the position of the tool at the end of the tubing is required; when drilling, the location of the bottom hole assembly and bit is needed, and when inserting an autonomous device into a wellbore, the device should be able to determine it own position.

Generally application specific dead-reckoning approaches are used to estimate the position of the apparatus in the wellbore. Such dead-reckoning techniques include measuring the length of wireline, drill pipe or coiled tubing reeled out, using an odometer on a wheeled device to measure the distance travelled or using inertial navigation. However relying on such approaches to measure the distance travelled can result in errors in the measurements due to conveyance stretch, conveyance compression, coiling of the tubing in the borehole or the odometer may slip. Because of this the size of the errors in the measurement typically increases as the distance travelled increases.

Other approaches used to determine the position of a device in a borehole include landmark recognition, such as where the downhole device is fitted with a casing collar locator (CCL) which can sense when the tool is adjacent a casing joint. However the CCL may fail to detect the joint or may detect a non-existent collar due to noise, and for an absolute position to be determined the positions of the casing joints must be known beforehand. A further approach, map-matching, provides the downhole device with sensors which are able to measure some characteristic of the wellbore environment, i.e. a gamma-ray sensor to measure the amount of gamma-rays being emitting from the surrounding formation. If the gamma-ray profile is well known the sensors reading can be correlated with the profile and the position can be determined. However this approach can be affected from sensor noise and have problems similar to that encountered with landmark recognition approaches. Examples of downhole devices that use such approaches are described in US6378627 and US6845819. Furthermore to make use of the positioning data obtained, it is often required that communication with the surface is needed for the operator or surface-based systems to make decisions and/or control the device based on its position.

US6378627 discloses a downhole tool for performing a desired operation in a wellbore. Data obtained downhole is used to control the operation of the tool or cause the tool to take various actions, such as initiating changes in the operation of various other downhole tools. The depth of the device is monitored by sensors, such as a casing collar locator (CCL).

US6845819 also discloses an autonomous unit for performing logging and remedial operations in a wellbore. It also uses sensors to identify locations in the well where it is to perform logging or remedial operations.

US2004/0168797 is considered the closest prior art and describes using a Bayesian technique to estimate the position of a downhole device as it tracks along the borehole. Data from sensors is transmitted uphole and the calculations using the Bayesian approach are preformed by a surface computer to track the device in real-time.

It is the object of the invention to provide a borehole apparatus that is capable of autonomously determining its location accurately in a wellbore to initiate performance of a predetermined task by a downhole tool at a particular location.

### Disclosure of the invention

Accordingly a first aspect of the invention comprises a borehole apparatus capable of autonomously estimating its position in a borehole and autonomously controlling the actions of a downhole tool located in the borehole, the apparatus comprising:
a body;
at least one measurement device capable of measuring a parameter of the borehole and/or the distance travelled by the device;
a computer system located in the body, the computer system comprising;
   a processor arranged to receive data from the measurement device and to calculate the position of the apparatus in the borehole; and a data storage device capable of storing data that have been processed by the processor; and
   a power system;
   wherein the computer system is configured to process the data gathered from the measurement device to estimate the position of the borehole apparatus using a Bayesian approach and **characterized in that** the data storage device is capable of storing instructions to control the action of the downhole tool and the borehole apparatus is configured to provide output signals to control an action of the downhole tool, the action being dependant on the position of the apparatus in the borehole and the instructions stored by the data storage device.

The apparatus can determine its position in the borehole relative to the surface or to some other reference point. The apparatus is programmed to use a Bayesian approach to determine the location of the apparatus downhole, which allows the apparatus to more accurately determine its position in the borehole. Using the Bayesian approach and having pre-programmed instructions to enable an action of a tool to be performed the apparatus can perform fully autonomously as does not have to receive any information from the surface to determine its position or determine what action should occur.

Preferably the borehole apparatus further comprises a downhole tool. The apparatus can control the actions of an attached tool and/or the apparatus can control the actions of a downhole tool in the borehole that is remote from the apparatus.

To estimate the position of the borehole apparatus the processor can be configured to: receive a prior location probability distribution associated with a first position of the apparatus in the borehole; receive at least one measurement from the measurement device, and calculate a posterior location probability distribution with the subsequent position, the posterior location probability distribution being conditional on the prior location probability distribution, and the or each measurement.

The measurement device is at least one sensor capable of measuring a parameter of the borehole. The apparatus can also include an odometer as a measurement device to measure the distance the apparatus has traveled along the borehole.

The downhole tool can be a measuring tool or an intervention tool.

Preferably the apparatus comprises a telemetry system. The telemetry system can provide communication between the apparatus and the surface and/or the apparatus and a remote downhole tool

Preferably the apparatus comprises a transport mechanism to move the apparatus along the borehole.

A second aspect of the invention comprises a method for performing an operation at a predetermined location in a borehole comprising: deploying the borehole apparatus as described above into the borehole;
providing data to the processor from the measurement device;
processing the data using a Bayesian technique to calculate the position of the borehole apparatus;
determining whether the apparatus needs to perform an operation at the position calculated; and
sending instructions to a downhole tool.

If it is determined that the apparatus is at a position where an operation should be performed the apparatus will initiate operation of the downhole tool. The step of determining whether an apparatus need to perform an operation comprises relating the position of the apparatus to data stored in the data storage device. The data is preferably preloaded landmark data which is associated with particular programming statements which will send instructions to the tool.

Processing the data to calculate the position of the apparatus can comprise:
(a) providing a prior location probability distribution associated with a first position of the apparatus in the borehole;
(b) providing at least one measurement from the measurement device, the or each measurement being associated with movement of the apparatus to a subsequent position in the borehole, and
(c) calculating a posterior location probability distribution with the subsequent position, the posterior location probability distribution being conditional on the prior location probability distribution, and the or each measurement.

The method can comprise initiating a measurement operation and/or initiating an intervention operation.

The method can comprises initiating operation of a downhole tool that is attached to the apparatus and/or the method can comprise initiating operation of a downhole tool that is remote from the device.

When an operation of a downhole tool is initiated the method can comprise sending an output signal from the borehole apparatus to the remote downhole tool.

### Brief description of the drawings

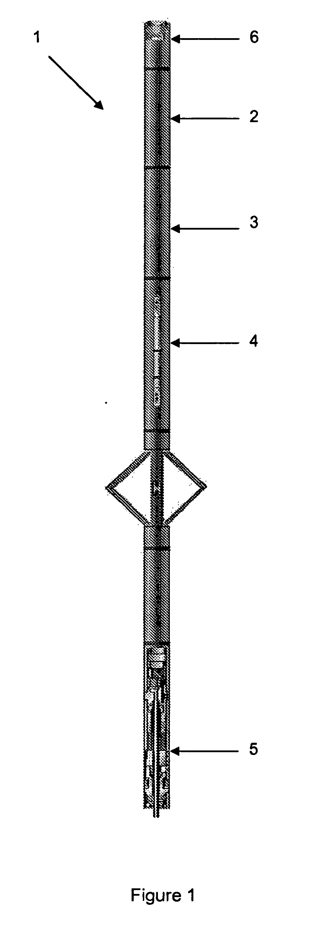

Figure 1 shows an example of a borehole apparatus that can determine its position in the borehole and perform an operation at a predetermined location.

### Mode(s) for carrying out the invention

The invention is directed to a borehole apparatus that is capable of estimating its position in a borehole autonomously. Once the position of the apparatus has been estimated, this can trigger a downhole tool to perform a task. The apparatus can more accurately determine its position compared to apparatuses that rely solely on one positioning determining system, such as a surface depth acquisition system, to determine how far the apparatus has travelled along the borehole. By using a Bayesian approach to determine its position factors, such as conveyance stretch, conveyance compression, or odometer slippage, which can cause errors in the measurement systems, are removed or reduced.

Figure 1 shows an example of a borehole apparatus that can be used for the invention. The borehole apparatus (1) comprises a body that includes a computer system having a processor (2), a power system (3), sensors (4) and a downhole tool (5).

The computer system comprises a processor (2) that is pre-programmed to use information obtained from sensors to estimate the position of the apparatus using a Bayesian approach. The computer system comprises a data storage device, to store pre-loaded well landmark data, data obtained from the sensors and data processed by the processor. The computer system is also programmed to control the actions of a downhole tool, so that the downhole tool is instructed to perform a predetermined function when the apparatus reaches a particular position in the borehole. The computer system is programmed to relate previously obtained landmark data that are stored in the system with particular positions of the apparatus in the well. The computer system being programmed to specify particular actions that will be performed when the apparatus is at particular locations of the wellbore.

The sensors (4) can be mounted internal or externally on the apparatus. Types of sensors that can be used include casing collar locators (CCL) to detect casing joints in cased holes, sensors for detecting the presence of casing perforation, and gamma-ray sensors. The apparatus may also contain other sensors that can provide information that can be used to determine the position of the apparatus in the borehole. The borehole apparatus can also have an odometer fitted to determine the distance travelled by the apparatus along the length of the borehole.

Data from the sensors is transmitted to the processor whereby it is processed using a Bayesian approach to estimate the position of the device. The device can have multiple sensors so that a combination of data from all the sensors present can be used to provide a more accurate position estimate, than if a single sensor is used. For example, errors from odometers grow with distance, but detection of landmarks reduces the error spread again, and if one of the sensors or sources fails the data from the remaining sensors can still be used in the calculations to estimate the position of the apparatus in the borehole.

The power supply (3) provides power to the borehole apparatus, and can be provided from onboard sources such as a battery or an internal generation system.

The device can also comprise a telemetry system (6), so that information can be transmitted between the surface and the borehole apparatus and/or between the apparatus and a tool located in the borehole. Although a transmission system can be present in the apparatus, transmission of information from the surface to the apparatus is not required to determine the position of the apparatus or to initiate operation of the downhole tool. The position of the apparatus is automatically calculated from information obtained from sensors when the apparatus is downhole and the operation of the downhole tool is controlled by instructions pre-programmed into the computer system of the apparatus.

The apparatus can comprise a downhole tool (5). The operation of the downhole tool is dependant on the position of the apparatus in the borehole. The downhole tool receives instructions via an output signal from the apparatus to perform a predetermined function when the apparatus reaches a particular location in the borehole. The downhole tool can be a monitoring or intervention tool, for example, logging tools, sample collecting tools, tools for perforate casing, imaging tools, cutting or drilling tools, sensors, or tools for carrying out maintenance work in the borehole.

While the borehole apparatus is exemplified as having a downhole tool attached to the apparatus, the apparatus can also initiate operation of a downhole tool that is separate from the apparatus. In this situation the downhole tool is able to receive a signal, that is sent from the apparatus to the tool, and which will initiate an action of the tool. The signal is generated when it is determined that the apparatus is at a particular position that corresponds to the task that is to be performed.

The apparatus can also comprise a transport mechanism to move the apparatus through the borehole. The transport mechanism is able to move the apparatus along the borehole without control from outside the borehole. The transport mechanism is powered by the onboard power system.

The apparatus does not require any permanent connection to the surface to operate, such as a wire, umbilical, or cables. However connections can be present, for example to allow data to be transmitted to the surface, to initially deploy the apparatus into the borehole or to provide power to the onboard power system. The apparatus can be lowered down the borehole on a wireline and when it reaches a particular location, can be released from the wireline such that it can move along the wellbore independently without any control from the surface. Its autonomous movement along the wellbore being controlled by instructions pre-programmed into the computer system of the apparatus. The position of the apparatus is calculated by the on-board processor from data the processor has received from sensors. When it is determined that the apparatus is at a particular location of the borehole, a downhole tool can be activated to perform a particular function.

In order to determine the position of the apparatus in the borehole a Bayesian approach as described in GB 2396219 can be used, whereby the location probability distribution at one position is used in the calculation of the location probability distribution of the following position.

Although like conventional dead-reckoning approaches to downhole position estimates, the method can result in increasing errors as the distance travelled by the apparatus increases, an advantage of using the Bayesian approach is that the extent of the error can be quantified by the probability distribution. This is particularly useful if the method is being used to track an apparatus that is to perform a critical operation, such as casing perforation, at a predetermined position in the wellbore. For example, even if the apparatus is tracked to the region to the predetermined position, an apparatus may choose to abort such an operation if there is an indication that the probability distribution is insufficiently focussed on that position.

The approach allows measurements which may derive from different sources to be combined in the calculation of the location probability distribution. The measurement may derive from disparate sources but still all carry useful information about the repositioning of the apparatus. Combining such information is advantageous because the range of likely positions for the apparatus, as defined by the location probability distribution is itself likely to be narrower when the amount of the information used to calculate the probability distribution is increased.

In one embodiment for determining the position of the apparatus the Bayesian approach involves: providing a prior location probability distribution associated with a first position of the apparatus in the borehole; providing a measurement of a putative distance moved by the apparatus and/or measurement of a characteristic of the surroundings of the apparatus, the or each measurement being associated with movement of the apparatus to a subsequent position in the borehole, and calculating a posterior location probability distribution with the subsequent position, the posterior location probability distribution being conditional on the prior location probability distribution, and the or each measurement.

When the borehole apparatus is deployed down the borehole the processor is initially set with a reference to the surface entry point into the borehole, so that when the device is at the top of the well the device begins with an initial probability distribution function (PDF) that is narrow and located at the top of the well. As the apparatus moves along the borehole a measurement of the putative distance moved and/or the characteristic of the surrounding of the apparatus is provided to the processor. Each measurement is associated with movement of the apparatus to a subsequent position in the borehole. A posterior location probability distribution associated with the subsequent position is calculated. The posterior location probability distribution being conditional on the prior location probability of each measurement. These steps are repeated for determining further positions of the apparatus as the apparatus moves along the borehole, with the posterior location probability of one repeat becoming the prior location probability distribution of the following repeat. The apparatus can proceeds down the borehole and is able to continuously calculate its position in the borehole.

Once the position of the apparatus has been determined, this information is used by the apparatus to dictate decision making and to control other tools in the borehole autonomously. Controlling other tools can include directing further data monitoring or measuring to occur or to activate an intervention operation. The apparatus is pre-programmed with previously obtained landmark data and with instructions which cause specific functions at particular locations and depths of the well to occur. The monitoring and intervention tools are sent commands based on the position of the apparatus.

For example, once the position of the apparatus has been estimated, and an acceptable probability has determined that the apparatus is at the required position in the well and/or adjacent a particular downhole device, the positioning information calculated will relate to particular internal landmark data and conditional programming statements that are stored by the computer system. This will results in instructions being sent to the downhole tool so that the action can occur. These landmark data and statements will determine when, where and what action will be performed by the downhole tool. However if the probability distribution determined is not sufficiently focussed at a particular position then apparatus will not cause a particular action to occur.

The action to be performed may either be a single action that is pre-programmed, a series of actions, or can vary the action of a tool dependant on what the apparatus has determined while acquiring data to determine its location. For example if the well is hotter than expected or fluid is more or less dense than expected at a particular depth of the well this may indicate a favourable or non-favourable condition, which will determine a particular action. The action could involve the activation of a mechanical action tool, i.e. to turn, push, vibrate, release or set in position a device or tool, such as plug setting or plug pulling. It could release micro-sensors, retrieve a device from the wellbore by latching, repairing by milling or grinding, or transmit and receive data by RF, EMF or other wireless means.

In one embodiment when the apparatus recognises it is at a particular location in the borehole, a particular task can be performed by the downhole tool of the apparatus. In another embodiment when the apparatus recognises it is at a particular location in the borehole, the apparatus sends a signal to a further tool already present in the borehole to perform a function. Such functions can include logging work, collecting samples, imaging, measuring, perforating, plugging, drilling, and maintenance operations.

The computer system is pre-programmed with instructions, such that the apparatus can send a signal to a downhole tool depending on the position of the apparatus resulting in the tool performing some action. This occurs automatically without the need for communication with the surface to receive instructions for the tool to perform an operation. With both the operation of the downhole tool controlled by the computer system of the apparatus and the position of the apparatus determined without communication with the surface, the apparatus is fully autonomous.

When the action of the tool is to take measurements, these measurements taken can be associated with a particular location in the wellbore. They can be stored on a data storage device of the apparatus to be retrieved later when the apparatus returns to the surface. Alternatively the measurements are transmitted to the surface in real-time.

Other changes can be made to the device while still remaining within the scope of the invention as specified in the appended claims.

## Claims

1. A borehole apparatus (1) capable of autonomously estimating its position in a borehole and autonomously controlling the actions of a downhole tool (5) located in the borehole, the apparatus comprising:
a body;
at least one measurement device (4) capable of measuring a parameter of the borehole or the distance travelled by the device;
a computer system located in the body, the computer system comprising; a processor (2) arranged to receive data from the measurement device and to calculate the position of the apparatus in the borehole; and a data storage device capable of storing data that have been processed by the processor; and
a power system (3);
wherein the computer system is configured to process the data gathered from the measurement device to estimate the position of the borehole apparatus using a Bayesian approach and **characterized in that** the data storage device is capable of storing instructions to control the actions of the downhole tool and that the borehole apparatus (1) is configured to provide output signals to control an action of the downhole tool (5), the action being dependant on the position of the apparatus (1) in the borehole and the instructions stored by the data storage device.

2. A borehole apparatus (1) according to claim 1 comprising a downhole tool (5).

3. A borehole apparatus (1) according to claims 1 or 2 wherein to estimate the position of the borehole apparatus the processor (2) is configured to:
receive a prior location probability distribution associated with a first position of the apparatus (1) in the borehole;
receive at least one measurement from the measurement device, and calculate a posterior location probability distribution with the subsequent position, the posterior location probability distribution being conditional on the prior location probability distribution, and the or each measurement.

4. A borehole apparatus (1) according to claims 1, 2 or 3 wherein the measurement device is at least one sensor (4) capable of measuring a parameter of the borehole.

5. A borehole apparatus (1) according to any preceding claim wherein the measurement device is an odometer.

6. A borehole apparatus (1) according to any preceding claim wherein the downhole tool (5) is a measuring tool.

7. A borehole apparatus (1) according to any preceding claim wherein the downhole tool (5) is an intervention tool.

8. A downhole device (1) according to any preceding claim further comprising a telemetry system.

9. A downhole device (1) according to any preceding claim further comprising a transport mechanism to move the apparatus along the borehole.

10. A method for performing an operation at a predetermined location in a borehole comprising:
deploying the borehole apparatus (1) of any of claims 1 to 9 into the borehole; providing data to the processor (2) from the measurement device;
processing the data using a Bayesian technique to calculate the position of the borehole apparatus (1);
determining whether the apparatus (1) needs to perform an operation at the position calculated; and
sending instructions to a downhole tool (5).

11. A method according to claim 10 wherein the step of determining whether an apparatus (1) need to perform an operation comprises relating the position of the apparatus (1) to data stored in the data storage device.

12. A method according to claims 10 or 11 wherein processing the data comprises:
providing a prior location probability distribution associated with a first position of the apparatus (1) in the borehole;
providing at least one measurement from the measurement device, the or each measurement being associated with movement of the apparatus (1) to a subsequent position in the borehole, and
calculating a posterior location probability distribution with the subsequent position, the posterior location probability distribution being conditional on the prior location probability distribution, and the or each measurement.

13. A method according to any of claims 10, 11 or 12 comprising initiating a measurement operation.

14. A method according to any of claims 10-13 comprising initiating an intervention operation.

15. A method according to any of claims 10-14 comprising initiating operation of a downhole tool (5) that is attached to the apparatus.

16. A method according to any of claims 10- 14 comprising initiating operation of a downhole tool (5) that is remote from the device.

17. A method according to claim 16 comprising sending an output signal from the borehole apparatus (1) to the remote downhole tool (5).

## Patentansprüche

1. Bohrlochvorrichtung (1), die ihre Position in einem Bohrloch selbstständig schätzen kann und die Aktionen eines Bohrlochwerkzeugs (5), das sich im Bohrloch befindet, selbstständig steuern kann, wobei die Vorrichtung umfasst:
einen Körper;
wenigstens eine Messvorrichtung (4), die einen Parameter des Bohrlochs oder die von der Vorrichtung zurückgelegte Strecke messen kann;
ein Computersystem, das sich im Körper befindet, wobei das Computersystem umfasst: einen Prozessor (2), der dazu ausgelegt ist, Daten von der Messvorrichtung zu empfangen und.die Position der Vorrichtung im Bohrloch zu berechnen; und eine Datenspeichervorrichtung, die Daten speichern kann, die vom Prozessor verarbeitet worden sind; und
ein Leistungsversorgungssystem (3);
wobei das Computersystem konfiguriert ist, um Daten zu verarbeiten, die von der Messvorrichtung gesammelt werden, um die Position der Bohrlochvorrichtung unter Verwendung einer Bayes-Methode zu schätzen, **dadurch gekennzeichnet, dass** die Datenspeichervorrichtung Befehle speichern kann, um die Aktionen des Bohrlochwerkzeugs zu steuern, und dass die Bohrlochvorrichtung (1) konfiguriert ist, um Ausgangssignale zum Steuern einer Aktion des Bohrlochwerkzeugs (5) bereitzustellen, wobei die Aktion von der Position der Vorrichtung (1) im Bohrloch und von den von der Datenspeichervorrichtung gespeicherten Befehlen abhängt.

2. Bohrlochvorrichtung (1) nach Anspruch 1, die ein Bohrlochwerkzeug (5) umfasst.

3. Bohrlochvorrichtung (1) nach Anspruch 1 oder 2, wobei der Prozessor (2) zum Schätzen der Position der Bohrlochvorrichtung konfiguriert ist, um:
eine frühere Aufenthaltswahrscheinlichkeitsverteilung, die einer ersten Position der Vorrichtung (1) im Bohrloch zugeordnet ist, zu empfangen;
wenigstens eine Messung von der Messvorrichtung zu empfangen und
eine spätere Aufenthaltswahrscheinlichkeitsverteilung anhand der nachfolgenden Position zu berechnen, wobei die spätere Aufenthaltswahrscheinlichkeitsverteilung durch die frühere Aufenthaltswahrscheinlichkeitsverteilung und durch die eine oder jede Messung bedingt ist.

4. Bohrlochvorrichtung (1) nach Anspruch 1, 2 oder 3, wobei die Messvorrichtung wenigstens ein Sensor (4) ist, der einen Parameter des Bohrlochs messen kann.

5. Bohrlochvorrichtung (1) nach einem vorhergehenden Anspruch, wobei die Messvorrichtung ein Wegstreckenzähler ist.

6. Bohrlochvorrichtung (1) nach einem vorhergehenden Anspruch, wobei das Bohrlochwerkzeug (5) ein Messwerkzeug ist.

7. Bohrlochvorrichtung (1) nach einem vorhergehenden Anspruch, wobei das Bohrlochwerkzeug (5) ein Eingreifwerkzeug ist.

8. Bohrlochvorrichtung (1) nach einem vorhergehenden Anspruch, die ferner ein Telemetriesystem umfasst.

9. Bohrlochvorrichtung (1) nach einem vorhergehenden Anspruch, die ferner einen Transportmechanismus umfasst, um die Vorrichtung längs des Bohrlochs zu bewegen.

10. Verfahren zum Ausführen einer Operation an einem vorgegebenen Ort in einem Bohrloch, das umfasst:
Bewegen der Bohrlochvorrichtung (1) nach einem der Ansprüche 1 bis 9 in das Bohrloch;
Bereitstellen von Daten von der Messvorrichtung für den Prozessor (2);
Verarbeiten der Daten unter Verwendung einer Bayes-Technik, um die Position der Bohrlochvorrichtung (1) zu,berechnen;
Bestimmen, ob die Vorrichtung (1) an der berechneten Position eine Operation ausführen soll; und
Senden von Befehlen zu einem Bohrlochwerkzeug (5).

11. Verfahren nach Anspruch 10, wobei der Schritt des Bestimmens, ob eine Vorrichtung (1) eine Operation ausführen soll, das Herstellen einer Beziehung zwischen der Position der Vorrichtung (1) und den in der Datenspeichervorrichtung gespeicherten Daten umfasst.

12. Verfahren nach Anspruch 10 oder 11, wobei das Verarbeiten der Daten umfasst:
Bereitstellen einer früheren Aufenthaltswahrscheinlichkeitsverteilung, die einer ersten Position der Vorrichtung (1) im Bohrloch zugeordnet ist;
Bereitstellen wenigstens einer Messung von der Messvorrichtung, wobei die oder jede Messung der Bewegung der Vorrichtung (1) zu einer nachfolgenden Position im Bohrloch zugeordnet ist, und
Berechnen einer späteren Aufenthaltswahrscheinlichkeitsverteilung mit der nachfolgenden Position, wobei die spätere Aufenthaltswahrscheinlichkeitsverteilung durch die frühere Aufenthaltswahrscheinlichkeitsverteilung und die oder jede Messung bedingt ist.

13. Verfahren nach einem der Ansprüche 10, 11 oder 12, das das Starten einer Messoperation umfasst.

14. Verfahren nach einem der Ansprüche 10-13, das das Starten einer Eingreifoperation umfasst.

15. Verfahren nach einem der Ansprüche 10-14, das eine Startoperation eines an der Vorrichtung befestigten Bohrlochwerkzeugs (5) umfasst.

16. Verfahren nach einem der Ansprüche 10-14, das eine Startoperation eines entfernt von der Vorrichtung vorhandenen Bohrlochwerkzeugs (5) umfasst.

17. Verfahren nach Anspruch 16, das das Senden eines Ausgangssignals von der Bohrlochvorrichtung (1) zu dem entfernten Bohrlochwerkzeug (5) umfasst.

## Revendications

1. Appareil (1) capable d'estimer de façon autonome sa position dans un trou de forage et de commander de façon autonome les actions d'un outil en fond de trou (5), l'appareil comprenant :
un corps ;
au moins un dispositif de mesure (4) capable de mesurer un paramètre du trou de forage ou la distance parcourue par le dispositif ;
un système d'ordinateur situé dans le corps, le système d'ordinateur comprenant : un processeur (2) agencé pour recevoir des données du dispositif de mesure et pour calculer la position de l'appareil dans le trou de forage; et un dispositif de stockage de données capable de stocker des données qui ont été traitées par le processeur ; et
un système d'alimentation (3) ;
où le système d'ordinateur est configuré pour traiter les données regroupées du dispositif de mesure pour estimer la position de l'appareil en utilisant une approche Bayésienne et **caractérisé en ce que** le dispositif de stockage de données est capable de stocker des instructions pour commander les actions de l'outil en fond de trou et **en ce que** l'appareil (1) est configuré pour fournir des signaux de sortie pour commander une action de l'outil en fond de trou (5), l'action étant dépendante de la position de l'appareil (1) dans le trou et des instructions stockées par le dispositif de stockage de données.

2. Appareil (1) selon la revendication 1, comprenant un outil en fond de trou (5).

3. Appareil (1) selon les revendications 1 ou 2, dans lequel pour estimer la position de l'appareil, le processeur (2) est configuré pour :
recevoir une distribution de probabilité d'emplacement antérieur associée à une première position de l'appareil (1) dans le trou ;
recevoir au moins une mesure du dispositif de mesure, et
calculer une distribution de probabilité d'emplacement postérieur avec la position ultérieure, la distribution de probabilité d'emplacement postérieur dépendant de la distribution de probabilité d'emplacement antérieur, et de la ou chaque mesure.

4. Appareil (1) selon les revendications 1, 2 ou 3, dans lequel le dispositif de mesure est au moins un capteur (4) capable de mesurer un paramètre du trou.

5. Appareil (1) selon l'une quelconque des revendications précédentes, dans lequel le dispositif de mesure est un odomètre.

6. Appareil (1) selon l'une quelconque des revendications précédentes, dans lequel l'outil en fond de trou (5) est un outil de mesure.

7. Appareil (1) selon l'une quelconque des revendications précédentes, dans lequel l'outil en fond de trou (5) est un outil d'intervention.

8. Dispositif de fond de trou (1) selon l'une quelconque des revendications précédentes, comprenant en outre un système de télémétrie.

9. Dispositif de fond de trou (1) selon l'une quelconque des revendications précédentes, comprenant en outre un mécanisme de transport pour déplacer l'appareil le long du trou.

10. Procédé de réalisation d'une opération à un emplacement prédéterminé dans un trou comprenant les étapes consistant à :
déployer l'appareil (1) selon l'une quelconque des revendications 1 à 9 dans le trou ;
fournir des données au processeur (2) à partir du dispositif de mesure ;
traiter les données en utilisant une technique Bayésienne pour calculer la position de l'appareil (1) ;
déterminer si l'appareil (1) a besoin d'effectuer une opération à la position calculée ; et
envoyer des instructions à un outil en fond de trou (5).

11. Procédé selon la revendication 10, dans lequel l'étape consistant à déterminer si un appareil (1) a besoin d'effectuer une opération comprend le fait de relier la position de l'appareil (1) à des données stockées dans le dispositif de stockage de données.

12. Procédé selon les revendications 10 ou 11, dans lequel le traitement de données comprend les étapes consistant à :
fournir une distribution de probabilité d'emplacement antérieur associée à une première position de l'appareil (1) dans le trou ;
recevoir au moins une mesure à partir du dispositif de mesure, la ou chaque mesure étant associée à un mouvement de l'appareil (1) vers une position ultérieure dans le trou, et
calculer une distribution de probabilité d'emplacement postérieur avec la position ultérieure, la distribution de probabilité d'emplacement postérieur dépendant de la distribution de probabilité d'emplacement antérieur, et de la ou chaque mesure.

13. Procédé selon l'une quelconque des revendications 10, 11 ou 12, comprenant l'initiation d'une opération de mesure.

14. Procédé selon l'une quelconque des revendications 10 à 13, comprenant l'initiation d'une opération d'intervention.

15. Procédé selon l'une quelconque des revendications 10 à 14, comprenant l'initiation d'une opération d'un outil en fond de trou (5) qui est attaché à l'appareil.

16. Procédé selon l'une quelconque des revendications 10 à 14, comprenant l'initiation d'une opération d'un outil en fond de trou (5) qui est éloigné du dispositif.

17. Procédé selon la revendication 16, comprenant l'envoi d'un signal de sortie de l'appareil (1) à l'outil en fond de trou éloigné (5).
